# EUROPEAN PATENT APPLICATION

(11) **EP 4 733 830 A1**
(43) Date of publication of application: **29.04.2026**
(21) Application number: 23943985.4
(22) Date of filing: 03.07.2023
(51) Int. Cl.: G02B 27/30, G01S 7/481, G01S 17/931

(54) **OPTICAL MODULE, TRANSMISSION MODULE, DETECTION APPARATUS, AND TERMINAL DEVICE**

(71) Applicant: Shenzhen Yinwang Intelligent Technologies Co., Ltd., Shenzhen, Guangdong 518110 (CN)
(72) Inventor: XIAO, Xisheng, Shenzhen, Guangdong 518129 (CN); LIU, Jun, Shenzhen, Guangdong 518129 (CN)
(74) Representative: Körber, Martin Hans
(86) International application number: PCT/CN2023/105574
(87) International publication number: WO 2025/007251

(57) **Abstract**

An optical module, a transmitting module, a detection apparatus, and a terminal device are provided. The optical module may be used in a lidar, and may be used in fields such as autonomous driving, intelligent driving, assisted driving, or mapping. The optical module includes a collimation component and a light homogenization component. The collimation component is configured to collimate a light beam. The light homogenization component is configured to homogenize the light beam from the collimation component. The collimation component is perpendicular to a principal optical axis of the optical module. An included angle between the light homogenization component and the principal optical axis of the optical module is α, and θ≤α<90°. The light homogenization component is inclined, so that a size of a light passing region formed by projecting, onto a window, an emergent light beam of the light homogenization component can be reduced, thereby decreasing a size of the transmitting module with an inclined window, and mitigating a stray light risk of a lidar with the inclined window.

## Description

### TECHNICAL FIELD

This application relates to the field of optical technologies, and in particular, to an optical module, a transmitting module, a detection apparatus, and a terminal device.

### BACKGROUND

With development of science and technology, intelligent terminals such as intelligent transportation devices, intelligent home devices, robots, and vehicles are gradually entering daily life of people. A lidar can sense ambient environment information, can identify and track a moving target and identify a stationary target, for example, a lane line or a sign, based on the sensed environment information, can perform route planning based on a navigator, map data, and the like, and the like. Therefore, lidars are gradually used in the intelligent terminals, and play an increasingly important role.

Currently, based on different application requirements of the lidar, there are different shaping requirements for a light beam emitted by a light source in the lidar. Lidar beam shaping, also referred to as light beam shaping, means shaping the light beam emitted by the light source into an emergent light beam with specific energy density distribution. However, currently, an emergent light beam of a mainstream lidar has a large light passing region. A larger light passing region indicates a larger volume occupied by a transmitting module and a higher stray light risk between the transmitting module and a receiving module. This poses a challenge for achieving a miniaturized design and high detection quality of the lidar.

In conclusion, how to reduce the light passing region of the emergent light beam of the lidar is an urgent technical problem to be resolved currently.

### SUMMARY

This application provides an optical module, a transmitting module, a detection apparatus, and a terminal device, to reduce a light passing region of an emergent light beam of a lidar.

According to a first aspect, this application provides an optical module. The optical module includes a collimation component and a light homogenization component. The collimation component is configured to collimate a light beam. The light homogenization component is configured to homogenize the light beam from the collimation component. The collimation component is perpendicular to a principal optical axis of the optical module. An included angle between the light homogenization component and the principal optical axis of the optical module is α, and θ≤α<90°.

In the foregoing solution, the light homogenization component in the optical module is configured to be inclined, so that when the optical module is used in a scenario in which there is an inclined window, the light homogenization component may be placed according to a principle of being consistent with an inclination direction of the window. In this way, a distance between the light homogenization component and the window can be closer each time the light homogenization component is inclined toward the window to a greater extent. Therefore, an emergent light beam of the light homogenization component can be projected onto the window over a small distance, and a light passing region formed on the window can be small. This helps decrease a size of a transmitting module with the inclined window, and mitigate a stray light risk of a lidar with the inclined window.

In a possible implementation, θ is an included angle between the window and the principal optical axis of the optical module. In this case, an inclination angle of the light homogenization component is controlled to be not greater than the inclination angle of the window, so that the light homogenization component can be placed within a position range in which a distance from the window can be shortened.

In a possible implementation, the included angle between the light homogenization component and the principal optical axis of the optical module is equal to the included angle between the window and the principal optical axis of the optical module, and the light homogenization component is parallel to the window. In this case, the inclination angle of the light homogenization component is consistent with the inclination angle of the window, so that the light homogenization component can be infinitely close to the window theoretically, and therefore, the light passing region formed on the window by the emergent light beam of the light homogenization component can be minimized.

In a possible implementation, an area of the light passing region, on the window, of the emergent light beam of the light homogenization component is less than a first area. In other words, the distance between the light homogenization component and the window is less than a first distance. In this case, when the light homogenization component is inclined, the distance between the light homogenization component and the window is reduced, so that the light passing region in which the emergent light beam of the light homogenization component is projected onto the window can be reduced.

In a possible implementation, the window may be a lidar window or a windshield. In this way, the optical module can be applied to a plurality of application scenarios including an application scenario in which there is a window and an application scenario in which there is no window.

In this application, there are a plurality of possible disposition manners of the light homogenization component and the window. Examples are as follows.

In a possible implementation, the light homogenization component and the window may be separately disposed. This can help separately manufacture the light homogenization component and the window.

In another possible implementation, the light homogenization component may be fastened on the window. For example, the light homogenization component is pasted on the window, so that the distance between the light homogenization component and the window can be minimized.

In still another possible implementation, the light homogenization component and the window may be designed in an integrated manner. For example, one surface of glass is manufactured as the window, and the other surface of the glass is manufactured as the light homogenization component. In this way, an element integrating both a function of the window and a light homogenization function can be obtained through one manufacturing process, to avoid a problem of assembly between elements.

In a possible implementation, the light homogenization component is a microlens array. In this way, performance of the optical module can be improved by using features of the microlens array, such as small unit size, high integration, high precision, and ease of manufacturing.

In a further possible implementation, the emergent light beam of the light homogenization component diverges in a first direction compared with an incident light beam of the light homogenization component. The first direction is a projection direction of an array direction of the light homogenization component on a first plane. The first plane is a plane perpendicular to the principal optical axis of the optical module. In this way, the light homogenization component can adjust a divergence angle of the light beam.

In a further possible implementation, the emergent light beam of the light homogenization component is deflected in a second direction compared with the incident light beam of the light homogenization component. The second direction is a direction perpendicular to the first direction on the first plane. In this way, the light homogenization component can form a non-linear emergent-light profile in angular space.

In a possible implementation, the microlens array includes K cylindrical lenses arranged in an array, and a direction of the array arrangement is any direction on a plane perpendicular to a normal of the microlens array. In this way, a light beam can be homogenized by using the K cylindrical lenses.

In a further possible implementation, a front surface and a rear surface of any cylindrical lens are staggered by the first distance in the direction of the array arrangement. A curvature radius of the front surface is different from a curvature radius of the rear surface. The front surface of the cylindrical lens is a surface opposite to the collimation component. The rear surface of the cylindrical lens is a surface opposite to the window. In this way, an emergent light diffused by the microlens array can be uniformly distributed relative to the principal optical axis of the optical module, and a tailing effect of an emergent-light profile is alleviated.

In a possible implementation, the microlens array includes N×M sub-lenses. A front surface of any sub-lens is a plane. A rear surface of the sub-lens is a spherical surface, an aspherical surface, or a hyperbolic surface. The front surface of the sub-lens is a surface opposite to the collimation component. The rear surface of the sub-lens is a surface opposite to the window. In this way, the light beam can be homogenized by using the N×M sub-lenses.

In a possible implementation, the collimation component includes one or more of a spherical mirror, a cylindrical mirror, and an aspherical mirror, so that a diverged light beam emitted by a light source component can be focused into a collimated light beam.

According to a second aspect, this application provides a transmitting module including a light source component and the optical module according to any one of the first aspect. The light source component is configured to emit a light beam. The optical module is configured to collimate and homogenize the light beam.

In a possible implementation, the transmitting module may further include a window.

According to a third aspect, this application provides a detection apparatus including a receiving module and the transmitting module according to the second aspect. The receiving module is configured to receive an echo signal. The echo signal is a signal obtained by reflecting a collimated and homogenized light beam by a target in a detection region.

In a possible implementation, the detection apparatus may further include a scanning module. The scanning module is configured to reflect a light beam from a light homogenization component to the detection region.

According to a fourth aspect, this application provides a terminal device including a control apparatus and the detection apparatus according to the third aspect. The control apparatus is configured to control the detection apparatus to detect a detection region.

For technical effects that can be achieved in any one of the second aspect to the fourth aspect, refer to the foregoing descriptions of beneficial effects in the first aspect. Details are not described herein again.

### BRIEF DESCRIPTION OF DRAWINGS

FIG. 1a is a diagram of a lens according to this application;
FIG. 1b is a diagram of another lens according to this application;
FIG. 1c is a diagram of a principal optical axis according to this application;
FIG. 1d is a diagram of a light beam divergence angle according to this application;
FIG. 2a is a diagram of a possible application scenario according to this application;
FIG. 2b is a diagram of a possible structure of a window according to this application;
FIG. 3a is a diagram of an element placement manner of a transmitting module;
FIG. 3b is a diagram of light passing regions of a transmitting module on different windows;
FIG. 3c is a diagram of light passing regions of another transmitting module on different windows;
FIG. 4a is a diagram of a structure of an optical module according to this application;
FIG. 4b is a diagram of a structure of another optical module according to this application;
FIG. 5 is a diagram of a disposition manner of a light homogenization component and a window according to this application;
FIG. 6 is a diagram of a specific structure of an optical module according to this application;
FIG. 7 is a diagram of an emergent-light profile of a light homogenization component according to this application;
FIG. 8 is a diagram of a specific structure of another optical module according to this application;
FIG. 9 is a diagram of an emergent-light profile of another light homogenization component according to this application;
FIG. 10 is a diagram of a structure design of a cylindrical lens according to this application;
FIG. 11 is a diagram of a specific structure of still another optical module according to this application;
FIG. 12 is a diagram of an emergent-light profile of still another light homogenization component according to this application;
FIG. 13 is a diagram of a structure of a transmitting module according to this application; and
FIG. 14 is a diagram of a structure of a detection apparatus according to this application.

### DESCRIPTION OF EMBODIMENTS

The following describes in detail embodiments of this application with reference to accompanying drawings.

The following explains and describes some terms in this application. It should be noted that these explanations are intended for ease of understanding by a person skilled in the art, and are not intended to constitute a limitation on the protection scope claimed in this application.

### 1. Lens

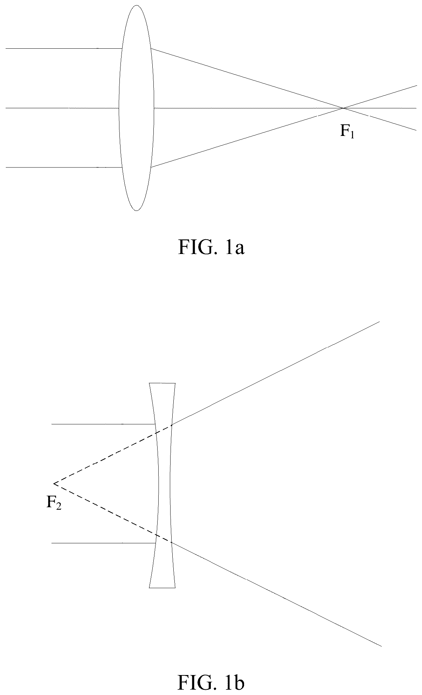

The lens is a transparent optical component that may focus or defocus a light beam. The light beam enters from one side of the lens and exits from the other side of the lens. A lens with a convex surface may convert a collimated light beam into a converged light beam, or convert a diverged light beam into a collimated light beam. For example, refer to FIG. 1a. A collimated light beam enters from a left side of a lens with a convex surface and exits from a right side of the lens with the convex surface, to be converted into a converged light beam and focused at a focus F₁. In this case, the lens with the convex surface is used as a focusing lens. Alternatively, a diverged light beam enters from a right side of a lens with a convex surface and exits from a left side of the lens with the convex surface, to be converted into a collimated light beam. In this case, the lens with the convex surface is used as a collimation lens. A lens with a concave surface may convert a collimated light beam or a converged light beam into a diverged light beam. For example, refer to FIG. 1b. A collimated light beam enters from a left side of a lens with a concave surface and exits from a right side of the lens with the concave surface, to be converted into a diverged light beam. In this case, the lens with the concave surface is used as a defocusing lens. Alternatively, a converged light beam enters from a right side of a lens with a concave surface and exits from a left side of the lens with the concave surface, to be converted into a collimated light beam. In this case, the lens with the concave surface is used as a collimation lens.

### 2. Principal optical axis

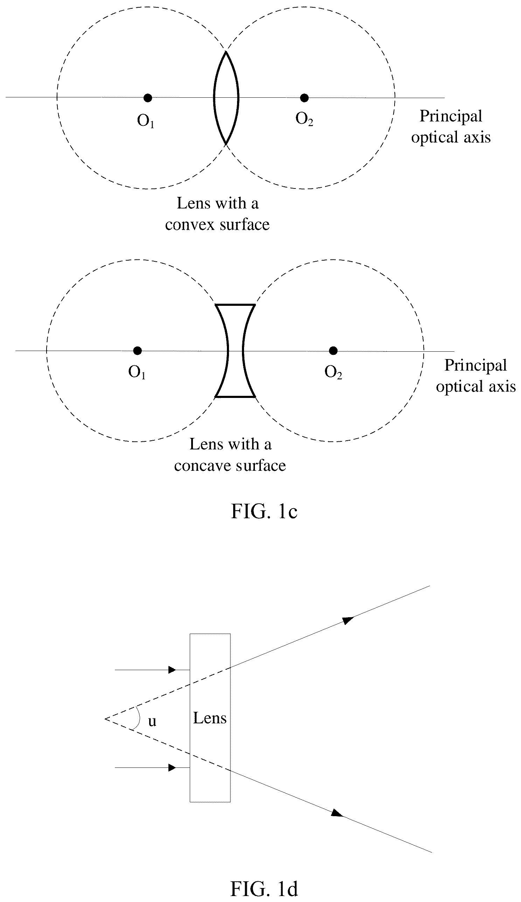

The principal optical axis is a straight line that passes through spherical centers of two spherical surfaces of a lens, and is also referred to as a principal axis. Refer to FIG. 1c. A plane that passes through a focus of the lens (for example, a front focus of a lens with a convex surface, with reference to a focus F₁ in FIG. 1a, or an object-side focus of a lens with a concave surface, with reference to a focus F₂ in FIG. 1b) and that is perpendicular to the principal optical axis is referred to as a first focal plane, and is also referred to as a front focal plane or an object-side focal plane.

### 3. Light beam divergence angle

The light beam divergence angle (u) is used to measure a rate at which a light beam diverges outward from a beam waist. Refer to FIG. 1d. The beam waist of the light beam is a position at which the light beam has a minimum radius (which is used to measure transverse spread of the light beam) in a propagation direction of the light beam, for example, a position of a lens shown in the figure. A light beam radius of the position at which the light beam has the minimum radius is also referred to as a beam waist radius.

### 4. Light beam collimation (light beam collimation) and light beam homogenization (light beam homogenization)

The light beam collimation means converting a diverged light beam into a collimated light beam, for example, a parallel light beam.

The light beam homogenization means homogenizing energy of a light beam, and converting the light beam into a light spot with uniform energy or intensity distribution.

### 5. Light spot

The light spot generally refers to energy density (or referred to as intensity) distribution formed by a light beam in angular space. The energy density distribution of the light spot may be in a form of low at two ends and high in the middle (or referred to as an inverted-T type or a type similar to an inverted T). For example, the energy density distribution may be in a form of normal distribution (Normal distribution) or a form similar to normal distribution (Normal distribution). For another example, energy density of the light spot may alternatively be uniformly distributed.

### 6. Light passing region (light passing region)

The light passing region is a coverage region in which a light beam is projected onto a surface of a window, and is used to measure an area of a light spot formed by the light beam irradiated onto the surface of the window. In some scenarios, the light passing region is also referred to as a light spot projection region or a window projection region.

The foregoing describes some terms used in this application, and the following describes possible application scenarios of this application.

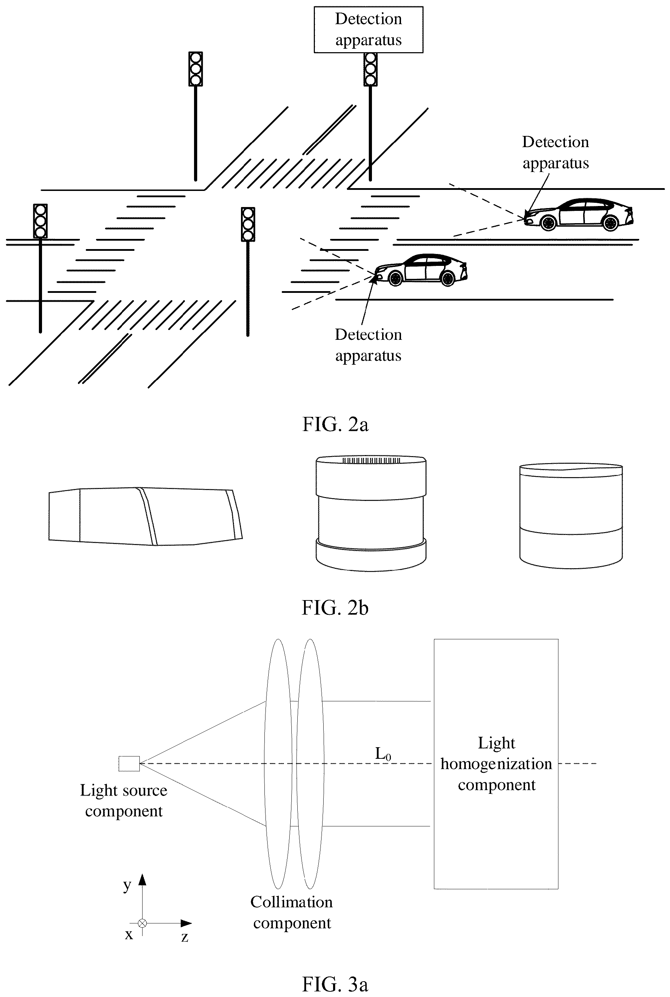

In a possible implementation, an optical module may be integrated into a transmitting module, the transmitting module may be integrated into a detection apparatus, and the detection apparatus may be mounted on a vehicle. The detection apparatus may be, for example, a lidar. FIG. 2a shows a diagram of an example of a possible application scenario according to this application. In the application scenario, an example in which the detection apparatus is mounted in the front of the vehicle is used. It may be understood that the detection apparatus may alternatively be mounted at another position of the vehicle, for example, any one or more of four sides: front, rear, left, and right sides, to capture information about an environment around the vehicle.

In some scenarios, the detection apparatus may include a window. The window is generally located at an outermost layer of the detection apparatus, and is configured to: protect an internal element of the detection apparatus from being affected by an external environment, and participate in optical imaging. Refer to FIG. 2b. Most windows are designed as 360° visual windows. However, some windows are designed to be inclined, to match a style of a vehicle body, so that aesthetics of the vehicle are enhanced. Alternatively, some detection apparatuses do not include a window. Such a detection apparatus is usually mounted in space inside the vehicle, for example, mounted behind a windshield. In this case, the windshield is used as the window to protect the detection apparatus. The windshield is a windscreen of the vehicle, and the detection apparatus may be placed behind a windscreen at any one or more of front, rear, left, and right sides of the vehicle.

In a possible application scenario, a working principle of the detection apparatus is as follows: The detection apparatus emits a light beam to a detection region, and if there is a target in the detection region, the target may reflect the received light beam to the detection apparatus (the reflected light beam may be referred to as an echo signal), and the detection apparatus determines associated information of the target based on the echo signal. Specifically, the detection apparatus may obtain, in real time or periodically, longitude and latitude, a speed, and an orientation of the vehicle, or associated information (for example, a distance of a target, a speed of a target, and/or a posture of a target) of a target (for example, another surrounding vehicle, a pedestrian, or an obstacle) within a specific range. Further, optionally, the detection apparatus may send the obtained information to a control apparatus in the vehicle, so that the control apparatus performs vehicle route planning and the like based on the obtained information. For example, a position of the vehicle may be determined based on the longitude and latitude, a traveling direction and destination of the vehicle in a future period of time may be determined based on the speed and orientation, or a quantity and density of obstacles around the vehicle may be determined based on a distance from a surrounding object. Further, optionally, assisted driving, autonomous driving, or the like of the vehicle may be implemented in combination with a function of an advanced driver assistance system (advanced driver assistance system, ADAS).

It should be understood that the foregoing application scenario is merely an example. The optical module provided in this application may be further used in another possible scenario, which is not limited to the scenario shown in the foregoing example. For example, the optical module may also be integrated into a vehicle light, and the vehicle light is mounted on a vehicle. In addition to a lighting function, the vehicle light may further implement an adaptive driving beam (adaptive driving beam, ADB) system, may project complex graphics such as text or a traffic sign, or may project a video picture or the like, to enhance driving assistance and entertainment functions. For another example, the optical module may also be integrated into a light, which is mounted on a stage as a stage light. For another example, the detection apparatus integrated with the optical module provided in this application may also be mounted on an uncrewed aerial vehicle as an airborne detection apparatus. For another example, the detection apparatus integrated with the optical module provided in this application may also be mounted on a roadside unit (roadside unit, RSU) as a road side traffic detection apparatus, so that intelligent vehicle-infrastructure cooperative communication and the like can be implemented. Refer to FIG. 2a. For another example, the detection apparatus integrated with the optical module provided in this application may also be mounted on an automated guided vehicle (automated guided vehicle, AGV). The AGV is a transport vehicle that is equipped with an automatic navigation apparatus, for example, an electromagnetic or optical automatic navigation apparatus, that can travel in a specified navigation path, and that has security protection and various transport functions. Details are not enumerated herein. It should be noted that the application scenarios described in this application are intended to describe the technical solutions in this application more clearly, and do not constitute a limitation on the technical solutions provided in this application.

For example, the foregoing application scenarios may be applied to fields such as self driving, autonomous driving, assisted driving, intelligent driving, connected vehicles, security surveillance, biomedical therapy, or mapping (for example, three-dimensional drawing).

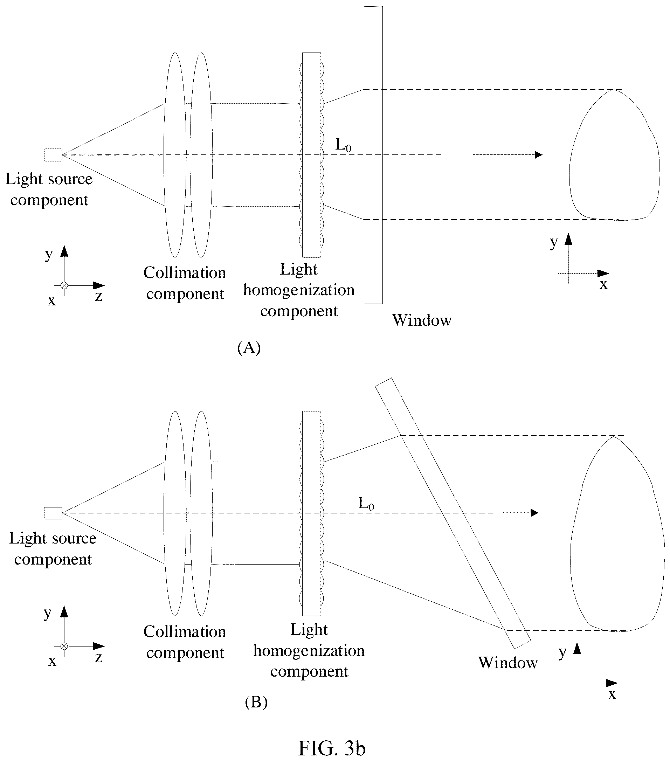

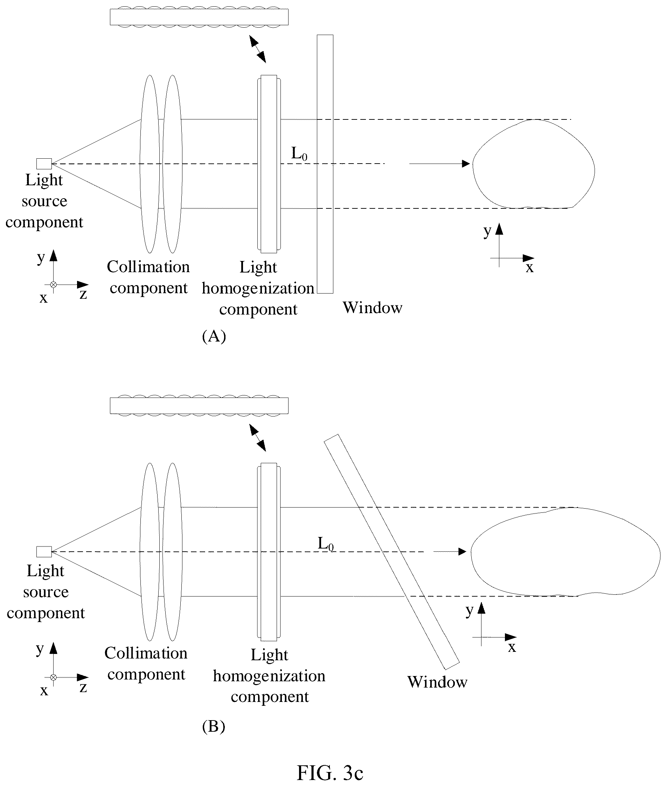

As described in the background, an emergent light beam of the lidar in a conventional technology has a large light passing region, and the large light passing region is determined by a placement position of an element in the transmitting module of the lidar in the conventional technology. For example, refer to FIG. 3a. The transmitting module may include a light source component, a collimation component, and a light homogenization component. Based on an element placement manner in the conventional technology, the light source component is located on a focal plane of the collimation component, and the light homogenization component is parallel to the collimation component, and is perpendicular to a principal optical axis L₀ of the transmitting module. FIG. 3b and FIG. 3c are diagrams of light passing regions, on windows in different forms, of a transmitting module using such placement position. In FIG. 3b and FIG. 3c, an example in which the light homogenization component is a microlens array is used. In an example shown in FIG. 3b, an array direction of the light homogenization component is in a y-axis direction shown in the figure. A light beam emitted by the light source component enters the light homogenization component after being collimated by the collimation component, and is transmitted from the light homogenization component to the window after being expanded and diverged in the y-axis direction, to form a light spot in a shape similar to a water drop shape. In an example shown in FIG. 3c, an array direction of the light homogenization component is in an x-axis direction shown in the figure. A light beam emitted by the light source component enters the light homogenization component after being collimated by the collimation component, and is transmitted from the light homogenization component to the window after being expanded and diverged in the x-axis direction, to form a light spot in a shape similar to a cloud shape.

Refer to (A) in FIG. 3b and (A) in FIG. 3c, in which vertical windows are used. In other words, the window, the collimation component, and the light homogenization component are all perpendicular to a principal optical axis L₀. In this scenario, because the window is parallel to the light homogenization component, the window may be close to the light homogenization component to a greatest extent. In this way, an emergent light beam of the light homogenization component can be projected onto the window over a short distance, and therefore, a light spot formed on the window is small. In other words, an area of a light passing region, on the window, of the light beam emitted by the light homogenization component is small. However, refer to (B) in FIG. 3b and (B) in FIG. 3c, in which inclined windows are used. In other words, the collimation component and the light homogenization component are perpendicular to a principal optical axis L₀, but the window is not perpendicular to the principal optical axis L₀. In this scenario, because the window is not parallel to the light homogenization component, the window and the light homogenization component need to be spaced by a specific distance when being placed. A larger spacing distance indicates that an emergent light beam of the light homogenization component needs to be projected onto the window over a longer distance. In this case, a light spot formed on the window is larger. In other words, when the lidar uses an inclined window, because a position of a "beam waist" is far away from the window due to an architectural constraint, an area of a light passing region, on the window, of the emergent light beam of the light homogenization component is large, and the large light passing region brings some adverse effects to the lidar. Examples are as follows.

First, during design, the window needs to cover an entire light passing region of the window. If the light passing region is large, specifications of the window also need to be designed to be large. This significantly increases a size of the transmitting module including the window, and is not conducive to a miniaturized design of the lidar.

In addition, the lidar is generally configured as an integrated transceiver. In other words, the transmitting module and a receiving module are both located on a same side of the window. If the light passing region in which the light beam is projected onto the window is large, there is a high probability that the light beam is reflected by the window. Because the receiving module is located on the same side as the transmitting module, there may be a probability that the reflected light beam is transmitted to the receiving module. These light beams, as stray light, affect receiving accuracy of the receiving module, and cause stray light crosstalk to the lidar.

Moreover, to mitigate a stray light risk, an isolation plate may be pasted on the window in some products, to make a light beam emitted by the transmitting module to the isolation plate only be emitted through the isolation plate without being reflected. However, due to a size limitation of the isolation plate, when the light passing region of the window is large, the isolation plate is highly likely to fail to completely cover the entire light passing region of the window, and a light passing region that is not covered by the isolation plate still has a stray light risk. A larger light passing region of the window indicates a higher difficulty in stray light processing for the lidar.

In view of the foregoing problems, this application provides an optical module. In the optical module, an inclined light homogenization component is disposed, so that a light passing region in which an emergent light beam of the light homogenization component is projected onto an inclined window can be reduced.

Based on the foregoing content, the following specifically describes the optical module provided in this application with reference to the accompanying drawings.

In the following descriptions, an "included angle" does not mean an absolute included angle, and a specific engineering error may be allowed. Numerical relationships such as "greater than", "less than", and "equal to" do not mean absolute numerical relationships, and a specific engineering error may be allowed.

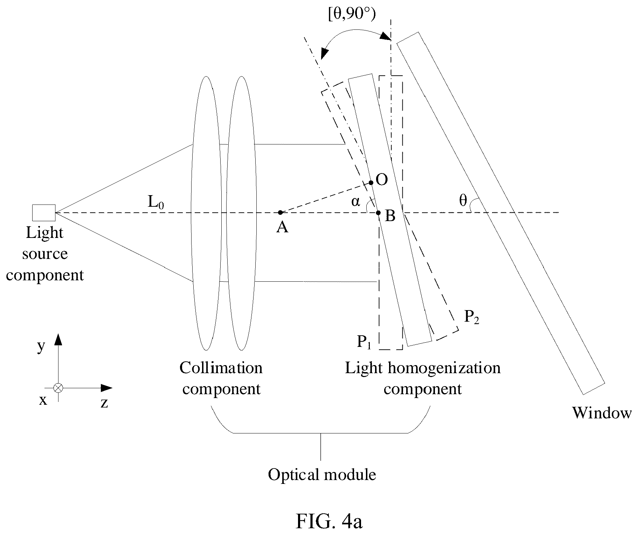

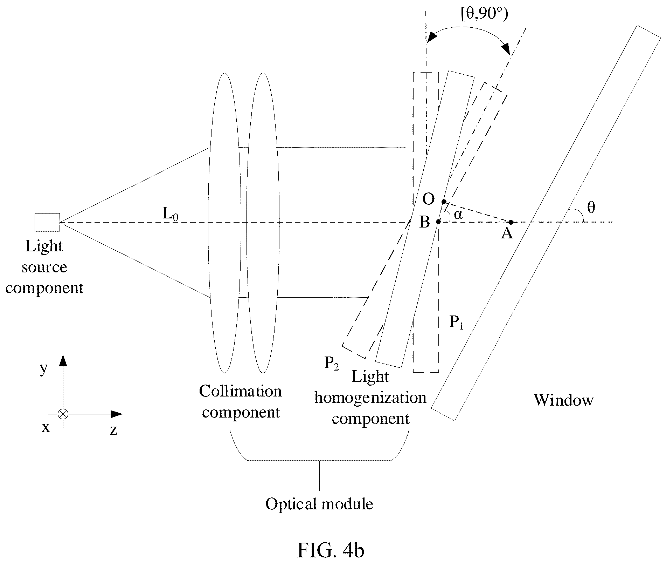

FIG. 4a and FIG. 4b are diagrams of structures of optical modules according to this application. The optical module includes a collimation component and the light homogenization component. The collimation component is configured to collimate a light beam from a light source component, and the light homogenization component is configured to homogenize the light beam from the collimation component. The collimation component is perpendicular to a principal optical axis L₀ of the optical module. An included angle between the light homogenization component and the principal optical axis L₀ of the optical module is α, and θ≤α<90°. It may be understood that the included angle α between the light homogenization component and the principal optical axis L₀ of the optical module may be understood as: A perpendicular line is drawn from a specific point A on the principal optical axis L₀ to the light homogenization component, to find a foot of the perpendicular O from the point A to the light homogenization component; and then, the foot of the perpendicular O is connected to a point B at which the principal optical axis L₀ and the light homogenization component intersect, where an included angle between the connection line OB and the principal optical axis L₀ is the included angle α between the light homogenization component and the principal optical axis L₀ of the optical module.

It may be understood that θ is an included angle between the window and the principal optical axis L₀ of the optical module. The light homogenization component may be placed at any position within a range from a position perpendicular to the principal optical axis L₀ to a position parallel to the window. For example, in FIG. 4a, the window is inclined to the left. The light homogenization component may be placed at any position between a position P₁ perpendicular to the principal optical axis L₀ and a position P₂ that is parallel to the window and to which the light homogenization component is rotated from the position P₁ in an x-axis direction shown in the figure, including the position P₂ parallel to the window and excluding the position P₁ perpendicular to the principal optical axis L₀. For another example, in FIG. 4b, the window is inclined to the right. The light homogenization component may be placed at any position between a position P₁ perpendicular to the principal optical axis L₀ and a position P₂ that is parallel to the window and to which the light homogenization component is rotated from the position P₁ in a -x-axis direction shown in the figure, including the position P₂ parallel to the window and excluding the position P₁ perpendicular to the principal optical axis L₀.

In a possible implementation, α=θ. It may also be understood that the included angle between the light homogenization component and the principal optical axis L₀ of the optical module is equal to the included angle between the window and the principal optical axis L₀ of the optical module, and the light homogenization component is parallel to the window. It may be further understood that the light homogenization component may be placed at the position P₂ shown in FIG. 4a or FIG. 4b.

In the foregoing optical module, the light homogenization component is inclined according to a principle of being consistent with an inclination direction of the window, and an inclination angle of the light homogenization component does not exceed an inclination angle of the window. In this way, a distance between the light homogenization component and the window can be closer each time the light homogenization component is inclined toward the window to a greater extent. When the inclination angle of the light homogenization component is consistent with the inclination angle of the window, the light homogenization component is parallel to the window. In this case, the light homogenization component can be infinitely close to the window theoretically. Therefore, the emergent light beam of the light homogenization component can be projected onto the window over a small distance, and the light passing region formed on the window can be small. This helps decrease a size of a transmitting module with the inclined window, and mitigate a stray light risk of a lidar with the inclined window. It can be learned that the light homogenization component is inclined, so that a problem that a position of a "beam waist" (that is, the light homogenization component) is far away from the window due to an original architecture design of a non-inclined light homogenization component can be resolved. In a new architecture design, a position of a "beam waist" may be closer to the window. This helps reduce an area of the light passing region in which the emergent light beam of the light homogenization component is projected onto the window.

In a possible implementation, the area of the light passing region, on the window, of the emergent light beam of the light homogenization component is less than a first area. It may also be understood that the distance between the light homogenization component and the window is less than a first distance. The first area may be considered as an area of a light passing region in which the emergent light beam of the light homogenization component at the vertical placement position P₁ is projected onto the window. The first distance may be considered as a distance between the light homogenization component at the vertical placement position P₁ and the window. It may be understood that, when the light homogenization component is rotated, the distance between the light homogenization component and the window is reduced, so that the light passing region in which the emergent light beam of the light homogenization component is projected onto the window can be reduced.

In a possible implementation, the distance between the light homogenization component and the window may be configured as an achievable minimum distance between the light homogenization component at a current placement position and the window. For example, when a process error is not considered, if the light homogenization component is placed at the position P₂ parallel to the window, the distance between the light homogenization component and the window may be configured as zero. In this case, an emergent light beam of the light homogenization component may be directly projected onto the window, and the light passing region in which the emergent light ray of the light homogenization component is projected onto the window can be minimized.

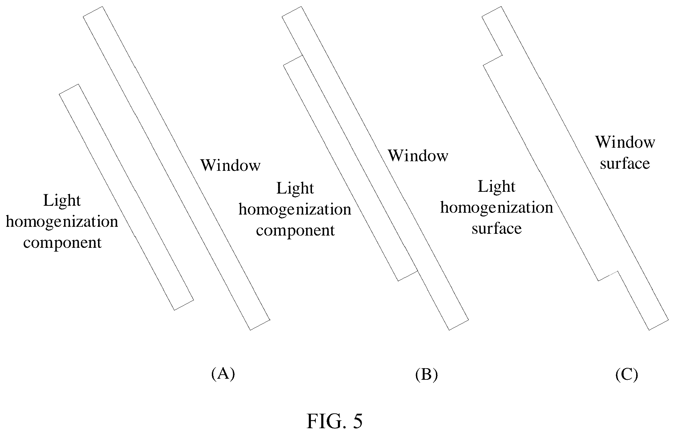

FIG. 5 is an example of a diagram of a disposition manner of the light homogenization component and the window according to this application. In this example, an example in which the light homogenization component is parallel to the window is used. For example, the light homogenization component and the window may be separately placed as shown in (A) in FIG. 5. Alternatively, the light homogenization component and the window may be disposed in a fastened manner as shown in (B) in FIG. 5. For example, the light homogenization component is pasted on the window. Alternatively, the light homogenization component and the window may be designed in an integrated manner as shown in (C) in FIG. 5. For example, one side of a glass substrate is made into a light homogenization surface, and the other side of the glass substrate is made into a window surface. In the disposition manner shown in (B) in FIG. 5 or (C) in FIG. 5, the distance between the light homogenization component and the window is zero. In the disposition manner shown in (A) in FIG. 5, the distance between the light homogenization component and the window is greater than zero.

In a possible implementation, the window may be a lidar window or a windshield. It may be understood that the lidar window is usually integrated into the transmitting module, the lidar window and the light homogenization component may be separately disposed, disposed in a fastened manner, or disposed in an integrated manner. However, because the windshield is disposed on a side of a vehicle, the windshield and the light homogenization component can only be separately disposed or disposed in a fastened manner. For example, after the transmitting module is manufactured, a surface on which the light homogenization component in the transmitting module is located is directly pasted on the windshield, or the transmitting module is placed at a position behind the windshield.

The following separately describes functional components and structures shown in FIG. 4a or FIG. 4b, to provide examples of specific implementation solutions.

### 1. Collimation component

For example, the collimation component may be a lens or a lens group that can implement a focusing function, for example, a lens with a convex surface. The lens with the convex surface, for example, may include but is not limited to a spherical mirror, a cylindrical mirror, or an aspherical mirror. The cylindrical mirror, for example, may include but is not limited to a plano-convex cylindrical mirror (or referred to as a plano-convex cylindrical lens), a plano-concave cylindrical mirror (or referred to as a plano-concave cylindrical lens), a double-convex cylindrical mirror (a double-convex cylindrical lens), and a double-concave cylindrical mirror (a double-concave cylindrical lens).

### 2. Light homogenization component

For example, the light homogenization component may be a microlens array (microlens array, MLA). The MLA is an array including lenses with micron-level light passing apertures and relief depths. The MLA has basic functions of a conventional lens, such as focusing and imaging, and also has features of small unit size, high integration, high precision, and ease of manufacturing. Using the microlens array as the light homogenization component can improve performance of an optical module.

In a possible implementation, the light homogenization component may implement at least the following two functions: adjusting a divergence angle of a light beam from a collimation component, and homogenizing the light beam from the collimation component. For example, the light homogenization component is the MLA. The light homogenization component may expand and diverge a light beam from a collimation component in a first direction, and further homogenize the light beam in the first direction. It may be understood that the first direction is a projection direction of an array direction of the light homogenization component on a first plane, and the first plane is a plane perpendicular to a principal optical axis L₀ of the optical module. In some examples, the light homogenization component may further implement the following third function: deflecting the light beam from the collimation component. For example, the light homogenization component may deflect a light beam from a collimation component in a second direction, where the second direction is a direction that is on the first plane and that is perpendicular to the first direction.

It may be understood that, when the light homogenization component is the MLA, an array direction of the MLA may be any direction on a plane perpendicular to a normal of the MLA. In other words, the MLA may be placed in the optical module in any direction, provided that it is ensured that the array direction of the MLA is not parallel to the principal optical axis of the optical module.

Based on the foregoing content, with reference to a specific hardware structure, the following provides possible implementations of using different types of MLAs in the foregoing optical module, to further understand a structure of the foregoing optical module. It should be noted that, in the components and structures provided in this application, unless otherwise stated or there is a logic conflict, the components and the structures may be combined to form another possible optical module structure based on an internal logical relationship of the components and the structures. The following three optical modules are merely examples.

In addition, for ease of description of the solutions, two coordinate systems are drawn in the following optical module. One is a local coordinate system including x', y', and z', and represents an arrangement feature of a microlens array, and the other is a global coordinate system including x, y, and z, and represents a placement feature of the microlens array in the optical module. However, it should be understood that the two coordinate systems are merely for ease of description of the solutions, and do not constitute a limitation on the essence of the solutions.

### Implementation solution 1

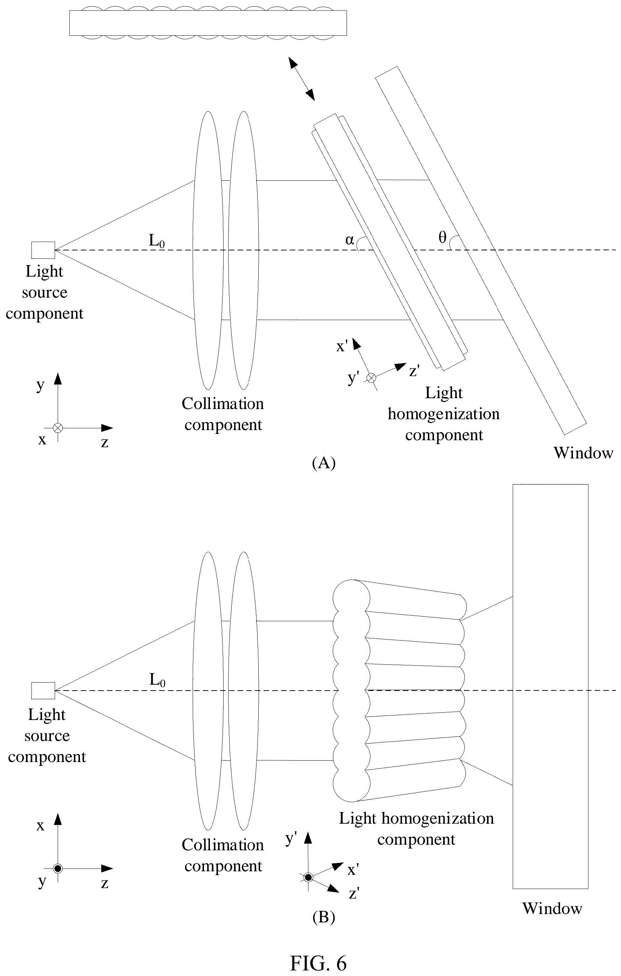

FIG. 6 is a diagram of a specific structure of the optical module according to this application. In this example, the light homogenization component is a cylindrical microlens array including K cylindrical lenses arranged in an array. Any two of the K cylindrical lenses have a same shape, a same period, and a same arrangement direction. For example, in FIG. 6, eight cylindrical lenses are used as an example. In the local coordinate system including x', y', and z', the eight cylindrical lenses are arranged in an array in a y' direction. A generatrix direction of each cylindrical lens is in the y' direction, and a directrix direction of each cylindrical lens is in an x' direction.

Still refer to FIG. 6. In the global coordinate system including x, y, and z, the principal optical axis L₀ of the optical module is parallel to a z direction. The light source component is located on a focal plane of the collimation component. The collimation component is parallel to an xy plane. A plane on which the window is located may be understood as a plane obtained by rotating the xy plane around an x axis by an angle of 90°-θ. To cooperate with the inclined window, when being assembled into the optical module, the cylindrical microlens array may be first placed into the module in a direction parallel to the xy plane, and then rotated around the x axis by an angle of 90°-α, so that an inclination direction of the cylindrical microlens array is consistent with an inclination direction of the window. Further, optionally, values of α and θ are equal, so that the cylindrical microlens array can be as close to the window as possible.

From a perspective of light beam transmission, a light beam emitted by the light source component is incident to the cylindrical microlens array after being collimated by the collimation component, and after the cylindrical microlens array expands and diverges the collimated light beam in an x direction, the expanded and diverged light beam is incident to the inclined window. It may be understood that, that the light beam is expanded and diverged in the x direction may also be understood as follows: It is assumed that, when the light beam is incident to the cylindrical microlens array, a divergence angle in a y direction is a1, and a divergence angle in the x direction is b1, and after the light beam is expanded and diverged by the cylindrical microlens array, a divergence angle of emergent light in the y direction is a2, and a divergence angle of the emergent light in the x direction is b2. In this case, a2=a1, and b2>b1. Optionally, in a desirable case, because incident light is collimated light, divergence angles a1 and b1 of the incident light in the y direction and the x direction may be considered to be zero. After the light beam is expanded and diverged in the x direction, the divergence angle b2 of the emergent light in the x direction may be considered to be greater than zero, and the divergence angle a2 of the emergent light in the y direction may be considered to remain at zero. However, in a non-desirable case, the collimation component cannot achieve absolute collimation, and the light homogenization component cannot achieve absolute light homogenization. As a result, the divergence angles a1 and b1 of the incident light in the y direction and the x direction may actually be small angles. After the light beam is expanded and diverged in the x direction, the divergence angle b2 of the emergent light in the x direction is greater than b1, while the divergence angle a2 of the emergent light in the y direction may remain at a small angle. The angle may be equal to a1, or may not be equal to a1 but slightly different from a1. The angle and a1 are within a deviation range of an engineering error.

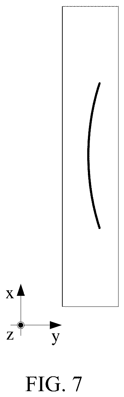

Optionally, due to impact of sagittal aberration, in angular space, an inclined cylindrical microlens array may further bend a light beam that is originally expanded and diverged in the x direction. For example, refer to FIG. 7. When the light beam is expanded and diverged in the x direction, the light beam may further be deflected in an opposite direction (namely, a -y direction) of rotation of the cylindrical microlens array, to form an arc-shaped emergent-light profile.

### Implementation solution 2

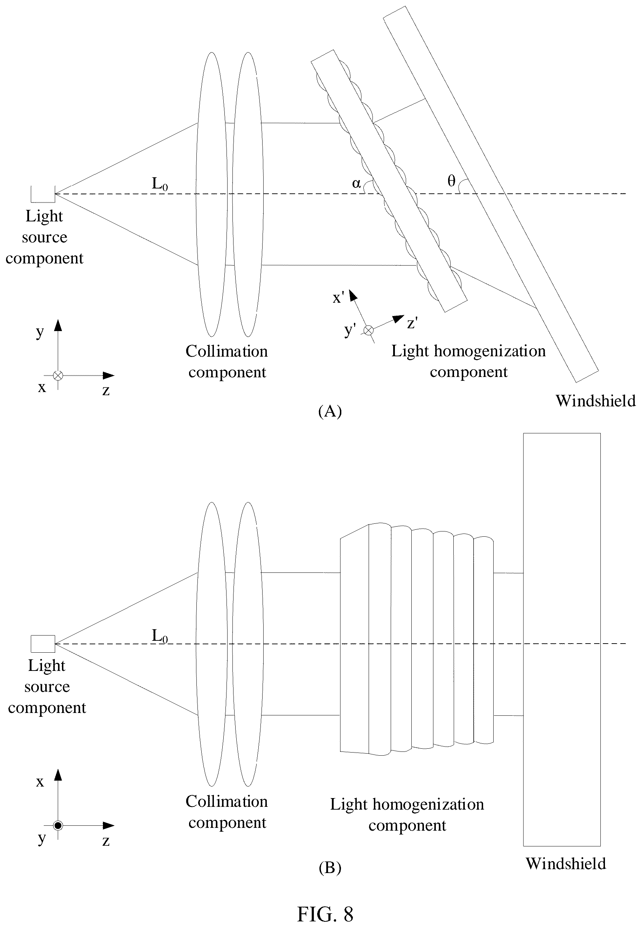

FIG. 8 is a diagram of a specific structure of another optical module according to this application. The light homogenization component in this example is the same as that in the implementation solution 1. A difference lies in that placement directions of the light homogenization components are different. Specifically, the microlens array in the implementation solution 1 is arranged in an array in the y' direction, the generatrix direction of each cylindrical lens is in the y' direction, and the directrix direction of each cylindrical lens is in the x' direction. However, a microlens array in the implementation solution 2 is arranged in an x' direction, a generatrix direction of each cylindrical lens is in the x' direction, and a directrix direction of each cylindrical lens is in a y' direction.

Still refer to FIG. 8. For scenario consideration, the optical module is designed to be mounted behind the windshield. A plane on which the windshield is located may be understood as a plane obtained by rotating an xy plane around an x axis by an angle of 90°-θ. To cooperate with the inclined windshield, when being assembled into the optical module, a cylindrical microlens array may be first placed into the module in a direction parallel to the xy plane, and then rotated around the x axis by an angle of 90°-α, so that an inclination direction of the cylindrical microlens array present when the optical module is placed behind the windshield is consistent with an inclination direction of the windshield. Further, optionally, values of α and θ are equal, so that the cylindrical microlens array can be as close to the windshield as possible.

From a perspective of light beam transmission, a light beam emitted by the light source component is incident to the cylindrical microlens array after being collimated by the collimation component, and after the cylindrical microlens array expands and diverges the collimated light beam in a y direction, the expanded and diverged light beam is incident to the inclined windshield. It may be understood that, that the light beam is expanded and diverged in the y direction may also be understood as follows: It is assumed that, when the light beam is incident to the cylindrical microlens array, a divergence angle in the y direction is a1, and a divergence angle in an x direction is b1, and after the light beam is expanded and diverged by the cylindrical microlens array, a divergence angle of emergent light in the y direction is a2, and a divergence angle of the emergent light in the x direction is b2. In this case, a2>a1, and b2=b1. Optionally, in a desirable case, because incident light is collimated light, divergence angles a1 and b1 of the incident light in the y direction and the x direction may be considered to be zero. After the light beam is expanded and diverged in the y direction, the divergence angle a2 of the emergent light in the y direction may be considered to be greater than zero, and the divergence angle b2 of the emergent light in the x direction may be considered to remain at zero. However, in a non-desirable case, the collimation component cannot achieve absolute collimation, and the light homogenization component cannot achieve absolute light homogenization. As a result, the divergence angles a1 and b1 of the incident light in the y direction and the x direction may actually be small angles. After the light beam is expanded and diverged in the y direction, the divergence angle a2 of the emergent light in the y direction is greater than a1, while the divergence angle b2 of the emergent light in the x direction may remain at a small angle. The angle may be equal to b1, or may not be equal to b1 but slightly different from b1. The angle and b1 are within a deviation range of an engineering error.

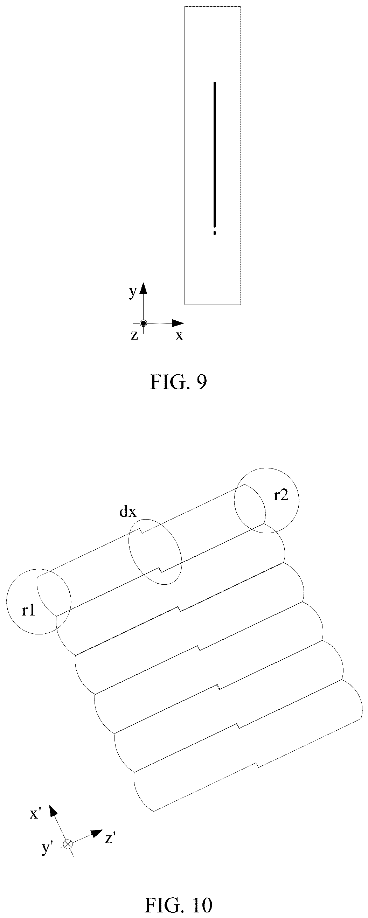

Optionally, refer to FIG. 9. Because the light beam is expanded and diverged in the y direction, an emergent-light profile of the cylindrical microlens array is elongated in the y direction. Although the light profile appears as a straight line, there is a tailing effect. Refer to FIG. 10. To address the tailing effect, in an optional implementation, for any cylindrical lens in the cylindrical microlens array, a front surface and a rear surface of the cylindrical lens may be staggered by a first distance dx in the x' direction of array arrangement. A curvature radius r1 of the front surface of the cylindrical lens is different from a curvature radius r2 of the rear surface of the cylindrical lens. The front surface of the cylindrical lens is a surface opposite to the collimation component, and the rear surface of the cylindrical lens is a surface opposite to the window. In other words, each cylindrical lens is designed to have a decentration dx in the x' direction between the front surface and the rear surface, and the generatrix curvature radius r1 of the front surface of the cylindrical lens is not equal to the generatrix curvature radius r2 of the rear surface of the cylindrical lens. According to experimental results, in such a design, the emergent light diverged by the cylindrical microlens array can be uniformly distributed relative to the principal optical axis L₀ of the optical module, and the tailing effect is alleviated.

### Implementation solution 3

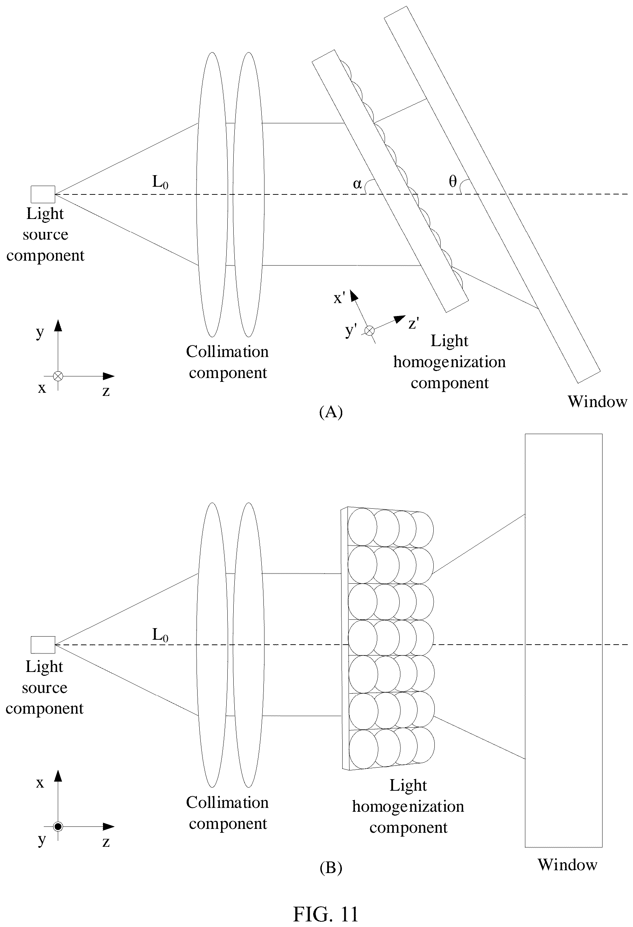

FIG. 11 is a diagram of a specific structure of still another optical module according to this application. In this example, the light homogenization component is a microlens array including N×M sub-lenses arranged in an array. A front surface of any sub-lens is a plane, and a rear surface of any sub-lens is a rotationally symmetric curved surface, for example, a spherical surface, an aspherical surface, or a hyperbolic surface. Optionally, in an example of the aspherical surface, a curvature radius of the rear surface is R1, a conic coefficient is k1, and a fourth-order aspheric coefficient is a4. The front surface of the sub-lens is a surface opposite to the collimation component, and the rear surface of the sub-lens is a surface opposite to the window.

Still refer to FIG. 11. In the global coordinate system including x, y, and z, the principal optical axis L₀ of the optical module is parallel to a z direction. The light source component is located on a focal plane of the collimation component. The collimation component is parallel to an xy plane. A plane on which the window is located may be understood as a plane obtained by rotating the xy plane around an x axis by an angle of 90°-θ. To cooperate with the inclined window, when being assembled into the optical module, the microlens array may be first placed into the module in a direction parallel to the xy plane, and then rotated around the x axis by an angle of 90°-α, so that an inclination direction of the microlens array is consistent with an inclination direction of the window. Further, optionally, values of α and θ are equal, so that the microlens array can be as close to the window as possible.

From a perspective of light beam transmission, a light beam emitted by the light source component is incident to the microlens array after being collimated by the collimation component, and after the microlens array expands and diverges the collimated light beam in an x direction and a y direction separately, the expanded and diverged light beam is incident to the inclined window. It may be understood that, that the light beam is expanded and diverged in the x direction and the y direction may also be understood as follows: It is assumed that, when the light beam is incident to the microlens array, a divergence angle in the y direction is a1, and a divergence angle in the x direction is b1, and after the light beam is expanded and diverged by the microlens array, a divergence angle of emergent light in the y direction is a2, and a divergence angle of the emergent light in the x direction is b2. In this case, a2>a1, and b2>b1. Optionally, in a desirable case, because incident light is collimated light, divergence angles a1 and b1 of the incident light in the y direction and the x direction may be considered to be zero. After the light beam is expanded and diverged in the x direction and the y direction, the divergence angle a2 of the emergent light in the y direction may be considered to be greater than zero, and the divergence angle b2 of the emergent light in the x direction may also be considered to be greater than zero. However, in a non-desirable case, the collimation component cannot achieve absolute collimation, and the light homogenization component cannot achieve absolute light homogenization. As a result, the divergence angles a1 and b1 of the incident light in the y direction and the x direction may actually be small angles. After the light beam is expanded and diverged in the y direction and the x direction, the divergence angle a2 of the emergent light in the y direction is greater than a1, and the divergence angle b2 of the emergent light in the x direction is also greater than b1.

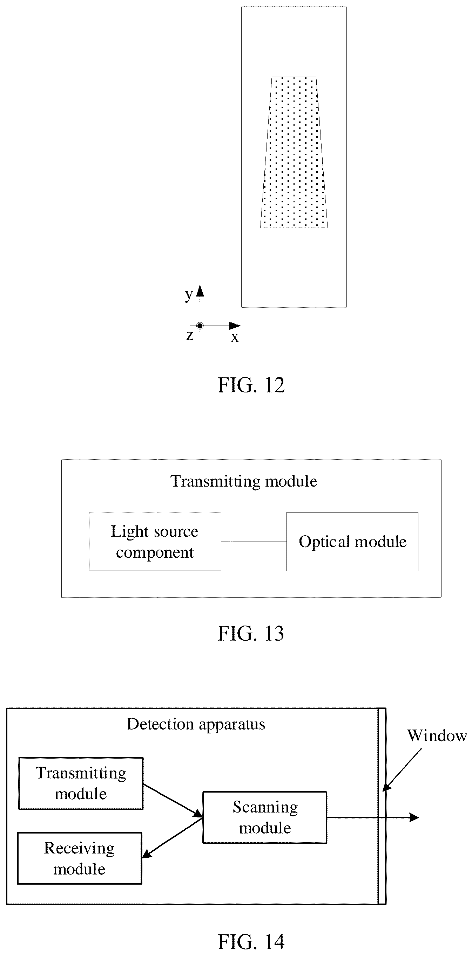

Optionally, due to impact of sagittal aberration, in angular space, an inclined cylindrical microlens array may further bend a light ray that is originally expanded and diverged in the x direction. For example, refer to FIG. 12. When the light beam is expanded and diverged in the x direction, the light beam may further be deflected in an opposite direction (namely, a -y direction) of rotation of the microlens array, to form a trapezoidal emergent-light spot.

It should be noted that the foregoing content is merely examples for describing some implementations of applying this solution to three possible microlens arrays. This solution may be further applied to another microlens array or another light homogenization component of a non-microlens array, whose implementation principle is similar to the foregoing content. These are not enumerated in this application.

Based on the foregoing described structures and function principles of the optical modules, this application may further provide a transmitting module. Refer to FIG. 13. The transmitting module may include a light source component and the optical module in any one of the foregoing embodiments.

For example, the light source component may be a point power supply or an array light source. The array light source may be a one-dimensional array light source (or referred to as a linear array light source), or may be a two-dimensional array light source (or referred to as a planar array light source). A light source of the point light source or the array light source may include but is not limited to a laser diode (laser diode, LD), an all-solid-state semiconductor laser (diode-pumped solid-state laser, DPSSL), an optical fiber laser, a vertical cavity surface emitting laser (vertical cavity surface emitting laser, VCSEL), an edge emitting laser (edge emitting laser, EEL), or the like.

For example, the transmitting module may further include a window. The window may be made of an infrared-transmissive material, for example, infrared plastic, black glass, or infrared-transmissive acrylic. In some examples, an infrared anti-reflection coating may be further coated on a surface of the window, to further improve transmittance of infrared light.

It may be understood that the transmitting module may further include another possible structure. For example, the transmitting module may further include another lens group. The another lens group includes at least one lens element. The lens element may be, for example, a spherical lens (for example, a concave lens or a convex lens), or may be an aspherical lens. It should be understood that the convex lens and the concave lens have a plurality of different types. For example, the convex lens includes a double-convex lens, a plano-convex lens, and a concavo-convex lens, and the concave lens includes a double-concave lens, a plano-concave lens, and a concavo-convex lens. Types of the convex lens and the concave lens are not limited in this application.

In addition, a material of the lens element in the foregoing content may be optical materials such as glass, resin, or crystal. When the material of the lens element is resin, this helps reduce weight of the transmitting module. When the material of the lens element is glass, this helps further improve imaging quality of the transmitting module.

Based on the foregoing described structures and function principles of the transmitting module, this application may further provide a detection apparatus. Refer to FIG. 14. The detection apparatus may include the transmitting module in any one of the foregoing embodiments. Details are not described herein again.

Further, optionally, the detection apparatus may further include a receiving module. Refer to FIG. 14. The receiving module is configured to receive an echo signal. The echo signal is a signal obtained by reflecting a collimated and homogenized light beam by a target in a detection region.

Further, optionally, the detection apparatus may further include a scanning module. Refer to FIG. 14. The scanning module is configured to project (for example, reflect) a received light beam onto the detection region.

In a possible implementation, a light beam emitted by the transmitting module is distributed in a third direction, and the scanning module may perform scanning in a fourth direction, to implement two-dimensional scanning in the detection region. For example, the third direction is perpendicular to the fourth direction. Alternatively, a light beam emitted by the transmitting module is distributed in a fourth direction, and the scanning module may perform scanning in a third direction, to implement two-dimensional scanning in the detection region. Scanning is performed by using a one-dimensional scanning module. This helps simplify a structure of the scanning module, reduce complexity of the detection apparatus, and improve scanning efficiency. Specifically, the scanning module is configured to change a scanning angle of the scanning module, to change a propagation direction of a light beam that is emitted from the transmitting module to the detection region, and therefore, implement scanning of the detection region. It should be noted that the scanning module may rotate in a continuous operation mode, or may rotate in a stepwise operation mode. This is not limited in this application. During actual application, a specific rotation mode may be preset.

For example, the scanning module may be one of a polyhedron (for example, octahedron, hexahedron, or tetrahedron) rotating mirror, a micro-electro-mechanical system (micro-electro-mechanical system, MEMS) vibrating mirror, or an oscillating mirror. It should be noted that a type of the scanning module is not limited in this application, provided that a structure can reflect the light beam from the transmitting module to the detection region.

It should be noted that the detection apparatus in this application may further include another possible module, for example, a control apparatus and/or a window (refer to FIG. 14). The control apparatus is configured to control the detection apparatus to detect the detection region. Alternatively, the control apparatus is further configured to plan a traveling route based on determined association information of the target, for example, avoiding an obstacle on a to-be-travelled path, or implementing autonomous driving of a vehicle. The window is configured to isolate impact of an external environment on a detection system.

For example, the control apparatus may include one or more processing units. The processing unit may be a circuit having a signal (or data) processing capability. In an implementation, a processor may be a circuit having a capability of instruction reading and running, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processor may alternatively be an application processor (application processor, AP), an image signal processor (image signal processor, ISP), another programmable logic device, a transistor logic device, a hardware component, or any combination thereof. Different processing units may be independent components, or may be integrated into one or more processors. For example, the detection apparatus may be a lidar.

Based on the foregoing described structures and function principles of the detection apparatus, this application may further provide a terminal device. The terminal device may include the detection apparatus in any one of the foregoing embodiments. For example, the terminal device may be a vehicle (for example, an uncrewed vehicle, a smart vehicle, an electric vehicle, or a digital vehicle), a robot, a mapping device, an uncrewed aerial vehicle, a smart home device (for example, a television, a robotic vacuum cleaner, a smart desk lamp, an acoustic system, a smart lighting system, an electrical control system, home background music, a home theater system, an intercom system, or a video surveillance device), a smart production device (for example, an industrial device), a smart transportation device (for example, an AGV, an uncrewed transport vehicle, or a truck), or a smart terminal (for example, a mobile phone, a computer, a tablet computer, a palmtop computer, a desktop computer, a headset, an acoustic device, a wearable device, a vehicle-mounted device, a virtual reality device, or an augmented reality device).

In embodiments of this application, unless otherwise specified or there is a logic conflict, terms and/or descriptions in different embodiments are consistent and may be referenced by each other. Technical features in different embodiments may be combined to form a new embodiment based on an internal logical relationship.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In the text descriptions of this application, the character "/" generally indicates an "or" relationship between the associated objects. In the formula of this application, the character "/" indicates a "division" relationship between the associated objects. In addition, in this application, the term "for example" indicates an example, an illustration, or a description. Any embodiment or design scheme described as an "example" in this application should not be explained as being more preferred or having more advantages than another embodiment or design scheme. Alternatively, it may be understood as that the term "example" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. The terms "first", "second", and the like are used to distinguish between similar objects but do not necessarily describe a specific order or sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical module, comprising a collimation component and a light homogenization component, wherein the collimation component is perpendicular to a principal optical axis of the optical module, an included angle between the light homogenization component and the principal optical axis of the optical module is α, and θ≤α<90°;
the collimation component is configured to collimate a light beam; and
the light homogenization component is configured to homogenize the light beam from the collimation component.

2. The module according to claim 1, wherein θ is an included angle between a window and the principal optical axis of the optical module.

3. The module according to claim 2, wherein the included angle between the light homogenization component and the principal optical axis of the optical module is equal to the included angle between the window and the principal optical axis of the optical module, and the light homogenization component is parallel to the window.

4. The module according to claim 2 or 3, wherein an area of a light passing region, on the window, of an emergent light beam of the light homogenization component is less than a first area.

5. The module according to any one of claims 2 to 4, wherein a distance between the light homogenization component and the window is less than a first distance.

6. The module according to any one of claims 2 to 5, wherein the window is a lidar window or a windshield.

7. The module according to any one of claims 2 to 6, wherein
the light homogenization component and the window are separately disposed;
the light homogenization component is fastened on the window; or
the light homogenization component and the window are designed in an integrated manner.

8. The module according to any one of claims 1 to 7, wherein the light homogenization component is a microlens array.

9. The module according to claim 8, wherein the emergent light beam of the light homogenization component diverges in a first direction compared with an incident light beam of the light homogenization component, the first direction is a projection direction of an array direction of the light homogenization component on a first plane, and the first plane is a plane perpendicular to the principal optical axis of the optical module.

10. The module according to claim 9, wherein the emergent light beam of the light homogenization component is deflected in a second direction compared with the incident light beam of the light homogenization component, and the second direction is a direction perpendicular to the first direction on the first plane.

11. The module according to any one of claims 8 to 10, wherein the microlens array comprises K cylindrical lenses arranged in an array, and a direction of the array arrangement is any direction on a plane perpendicular to a normal of the microlens array.

12. The module according to claim 11, wherein a front surface and a rear surface of any cylindrical lens are staggered by the first distance in the direction of the array arrangement, a curvature radius of the front surface is different from a curvature radius of the rear surface, the front surface of the cylindrical lens is a surface opposite to the collimation component, and the rear surface of the cylindrical lens is a surface opposite to the window.

13. The module according to any one of claims 8 to 10, wherein the microlens array comprises N×M sub-lenses, a front surface of any sub-lens is a plane, a rear surface of any sub-lens is a spherical surface, an aspherical surface, or a hyperbolic surface, the front surface of the sub-lens is a surface opposite to the collimation component, and the rear surface of the sub-lens is a surface opposite to the window.

14. The module according to any one of claims 1 to 13, wherein the collimation component comprises one or more of a spherical mirror, a cylindrical mirror, and an aspherical mirror.

15. A transmitting module, comprising a light source component and the optical module according to any one of claims 1 to 14, wherein
the light source component is configured to emit a light beam; and
the optical module is configured to collimate and homogenize the light beam.

16. The module according to claim 15, further comprising a window.

17. A detection apparatus, comprising a receiving module and the transmitting module according to claim 15 or 16, wherein
the receiving module is configured to receive an echo signal, and the echo signal is a signal obtained by reflecting a collimated and homogenized light beam by a target in a detection region.

18. The apparatus according to claim 17, wherein the detection apparatus further comprises a scanning module; and
the scanning module is configured to reflect a light beam from the light homogenization component to the detection region.

19. A terminal device, comprising a control apparatus and the detection apparatus according to claim 17 or 18, wherein
the control apparatus is configured to control the detection apparatus to detect the detection region.
